# FASCICULE DE BREVET EUROPEEN

(11) **EP 3 090 009 B1**
(45) Date de publication et mention de la délivrance du brevet: **20.09.2017**
(21) Numéro de dépôt: 14833515.1
(22) Date de dépôt: 22.12.2014
(51) Int. Cl.: C08J 3/00, C08L 23/12, B29C 47/00

(54) **PROCÉDÉ DE FABRICATION D'UNE COMPOSITION À BASE DE POLYPROPYLÈNE À FLUIDITÉ CONTRÔLÉE**
VERFAHREN ZUR HERSTELLUNG EINER POLYPROPYLENZUSAMMENSETZUNG MIT KONTROLLIERTER FLIESSFÄHIGKEIT
METHOD FOR MANUFACTURING A POLYPROPYLENE COMPOSITION WITH CONTROLLED FLUIDITY

(30) Priorité: 30.12.2013 FR 1363675
(43) Date de publication de la demande: 09.11.2016
(73) Titulaire: Compagnie Plastic Omnium, 69007 Lyon (FR)
(72) Inventeur: VIOT, Frédéric, 01450 Poncin (FR)
(74) Mandataire: Remy, Vincent Noel Paul
(86) Numéro de dépôt international: PCT/FR2014/053499
(87) Numéro de publication internationale: WO 2015/101734

(56) Documents cités:
- US-A1- 2010 048 807

## Description

La présente invention concerne le domaine des compositions comprenant des matières plastiques, notamment thermoplastiques. Elle s'applique en particulier à des compositions pour la fabrication de pièces automobiles.

Afin de faire baisser les émissions de CO₂ des véhicules, on tente de réduire leur poids. Entre autres mesures utilisées, on envisage de diminuer l'épaisseur de certaines pièces, notamment des pièces de carrosserie.

Afin d'obtenir une pièce de grandes longueur et largeur mais de faible épaisseur, il est préférable de contrôler la fluidité de la composition. Dans ce contexte a émergé le besoin d'un polypropylène de plus en plus grande fluidité (supérieure à 12 g/10 min, norme ISO 1133 [230°C, 2,16 kg]). Actuellement, afin d'augmenter la fluidité d'une composition comprenant du polypropylène, on ajoute un oxydant au début du procédé d'extrusion pour dégrader chimiquement le polypropylène et ainsi en diminuer la masse molaire.

Toutefois, lorsque la composition comprend plusieurs polyoléfines, associées généralement à un compatibilisant, l'ajout de l'oxydant conduit à des réactions de natures différentes en fonction de la nature de la polyoléfine. En particulier, les radicaux issus de la décomposition thermique de l'oxydant conduisent majoritairement aux branchements, voire à la réticulation, des chaînes polyéthylénées. Cette modification structurale des chaînes de polyéthylène entraîne une dégradation des caractéristiques mécaniques de la composition et des propriétés de surface de la pièce plastique obtenue par injection de cette composition. En particulier, la dégradation des propriétés de surface empêche l'adhérence d'une peinture sur la pièce et accentue les défauts d'aspect de la pièce peinte.

Pour résoudre ce problème, il a déjà été proposé, dans la demande de brevet français FR 2 984 894, un procédé consistant à faire interagir dans une extrudeuse un premier produit contenant majoritairement du polypropylène avec un oxydant et à ajouter après mélange de l'oxydant et du premier produit, un antioxydant, introduit avant ou en même temps qu'un deuxième produit comprenant du polyéthylène. Ce procédé impose donc que le deuxième produit comprenant le polyéthylène n'est pas ajouté dès le début de l'extrusion, ce qui est possible lorsque le deuxième produit comprenant le polyéthylène est utilisé en faible quantité par rapport à la composition finale. Ce procédé ne permet cependant pas la fabrication d'une composition contenant plus de 25 % en masse de deuxième produit comprenant le polyéthylène car si ce produit est présent dans une telle proportion, il doit être introduit dès le début de l'extrusion.

L'invention vise à proposer une solution alternative utilisable également lorsque le deuxième produit contenant le polyéthylène est majoritaire.

Un autre but de l'invention vise à proposer une solution alternative utilisable également lorsque le deuxième produit contenant le polyéthylène est présent dans une proportion supérieure à 25 % en masse.

Pour augmenter la fluidité d'un produit comprenant du polypropylène, l'invention consiste à lui ajouter un deuxième produit comprenant du polypropylène, de fluidité plus élevée. De tels mélanges sont possibles entre polypropylènes présentant une fluidité voisine. Par exemple on pourra obtenir un mélange homogène à partir d'un premier produit dont la fluidité est de 8 g/10 min et d'un deuxième produit dont la fluidité est de 12 g/10 min. Le mélange de quantités équivalentes des deux produits conduira à un mélange d'une fluidité de 10 g/10 min. En revanche, la mise en contact de produits de fluidités très différentes ne permet pas d'aboutir à un mélange homogène. En effet, le premier produit est constitué de chaînes de polypropylène longues par rapport aux chaînes très courtes du deuxième produit. Ces deux populations de chaînes glissent les unes sur les autres sans parvenir à former un mélange homogène.

L'invention a pour but, à partir de deux produits contenant du polypropylène, l'un présentant une fluidité moyenne et l'autre présentant une fluidité élevée, la fabrication de pièces de faible épaisseur, présentant de bonnes caractéristiques mécaniques et propriétés de surface.

L'invention a pour objet un procédé de fabrication d'une composition, caractérisé par la mise en présence des trois composants suivants :
- un produit contenant majoritairement du polypropylène présentant une fluidité contrôlée selon la norme ISO 1133 (230°C, 2,16 kg) inférieure à 10 g/10 min, présent à raison de 82 à 88 %, bornes incluses, en masse totale de la composition,
- du polypropylène présentant une fluidité contrôlée selon la norme ISO 1133 (230°C, 2,16 kg) supérieure à 400 g/10 min, présent à raison de 7 à 13 %, bornes incluses, en masse totale de la composition, et
- un polymère greffé par de l'anhydride maléique, présent à raison de 2 à 8 %, bornes incluses, en masse totale de la composition.

Dans la suite, on désigne par l'expression « polypropylène très fluide » le polypropylène présentant une fluidité contrôlée selon la norme ISO 1133 (230°C, 2,16 kg) supérieure à 400 g/10 min.

Dans le procédé, le polymère greffé permet de compatibiliser les deux populations de chaînes courtes et de chaînes longues de polypropylène. Ainsi est obtenu, à partir de deux produits contenant du polypropylène et présentant une fluidité très différente, un produit présentant une fluidité d'une valeur intermédiaire compatible avec la fabrication de pièces de faible épaisseur et présentant les caractéristiques mécaniques d'allongement à la rupture et de résistance aux chocs et les propriétés de surface requises.

Ce procédé est également utilisable lorsque le produit contenant majoritairement du polypropylène contient du polyéthylène.

De façon optionnelle, le procédé comprend deux étapes, exécutées dans cet ordre :
- mise en présence du produit contenant majoritairement du polypropylène et du polypropylène présentant une fluidité contrôlée selon la norme ISO 1133 (230°C, 2,16 kg) supérieure à 400 g/10 min, et
- ajout du polymère greffé par de l'anhydride maléique.

Préférentiellement, le produit contenant majoritairement du polypropylène et le polypropylène présentant une fluidité contrôlée selon la norme ISO 1133 (230°C, 2,16 kg) supérieure à 400 g/10 min sont mis en présence de manière à obtenir un premier mélange et le polymère greffé par de l'anhydride maléique est ajouté dans un deuxième temps à ce premier mélange.

Le procédé peut ainsi être ainsi effectué en deux étapes distinctes, l'ajout du polymère greffé par de l'anhydride maléique pouvant être décidé ultérieurement, pour la fabrication de pièces lorsque celles-ci nécessitent de présenter des propriétés mécaniques d'allongement à la rupture et de résistance aux chocs améliorées.

De façon optionnelle, le polymère greffé par de l'anhydride maléique est du Styrène Ethylène Butadiène Styrène (SEBS).

Selon un premier mode de réalisation, la mise en présence des composants est effectuée dans une extrudeuse.

Selon un second mode de réalisation, la mise en présence des composants est effectuée dans une vis de presse.

Du fait que tous les composants entrant dans la composition peuvent être ajoutés simultanément, le procédé rend possible d'effectuer le mélange à ce stade de la fabrication de la pièce.

Avantageusement, le produit contenant majoritairement du polypropylène contient en masse totale dudit produit entre 5 et 10 %, bornes incluses, de polyéthylène.

Par rapport au procédé décrit dans la demande de brevet français FR 2 984 894, ce procédé présente l'avantage d'être plus simple et de permettre le recyclage d'une plus grande quantité de matériau dans une même pièce. En effet, le polypropylène contenant le polyéthylène peut être ajouté en même temps que les autres composants.

De façon optionnelle, le produit contenant majoritairement du polypropylène est issu au moins en partie de recyclage.

Ce produit est par exemple issu de résidus de broyage automobile (RBA) ou de déchets d'équipements électriques et électroniques (DEEE). Le procédé selon l'invention permet donc la valorisation de ces déchets, ainsi que l'obtention de pièces ayant un prix de revient bas.

L'invention a également pour objet une composition, caractérisée en ce qu'elle contient au moins du polypropylène, du polyéthylène et de l'acide maléique, et en ce qu'elle présente une fluidité contrôlée selon la norme ISO 1133 (230°C, 2,16 kg) supérieure ou égale à 30 g/10 min.

En fin de réaction de compatibilisation, les résidus d'anhydride maléique demeurant dans le milieu sont transformés par hydratation en acide maléique, c'est pourquoi la composition résultant du procédé contient de l'acide maléique.

Cette composition, présentant, en dépit d'une fluidité élevée, de bonnes caractéristiques mécaniques d'allongement à la rupture et de résistance aux chocs, est utilisable pour la fabrication de pièces de grandes longueur et largeur mais de faible épaisseur.

Préférentiellement, la composition contient au moins 0,2 % en masse totale de la composition d'un polymère greffé par de l'anhydride maléique.

De façon préférentielle, le polyéthylène et au moins une partie du polypropylène de la composition sont issus de recyclage.

L'invention a également pour objet une pièce de véhicule automobile fabriquée dans la composition décrite ci-dessus.

Optionnellement, la pièce forme au moins une partie d'une pièce de carrosserie pour véhicule automobile.

La pièce peut être notamment une peau de pare-choc, un panneau d'ouvrant (porte latérale ou hayon, par exemple) ou une aile.

L'invention sera mieux comprise à la lecture des figures annexées, qui sont fournies à titre d'exemples et ne présentent aucun caractère limitatif, dans lesquelles :
La figure 1 est une représentation schématique d'un dispositif selon un mode de réalisation de l'invention.
La figure 2 est une représentation schématique d'un dispositif selon un autre mode de réalisation de l'invention.
La figure 3 est un organigramme d'un procédé de fabrication d'une pièce selon un mode de réalisation de l'invention.
La figure 4 est un organigramme d'un procédé de fabrication d'une pièce selon un autre mode de réalisation de l'invention.
La figure 5 est une vue en perspective d'une pièce selon l'invention fabriquée en mettant en oeuvre les procédés illustrés sur les figures.

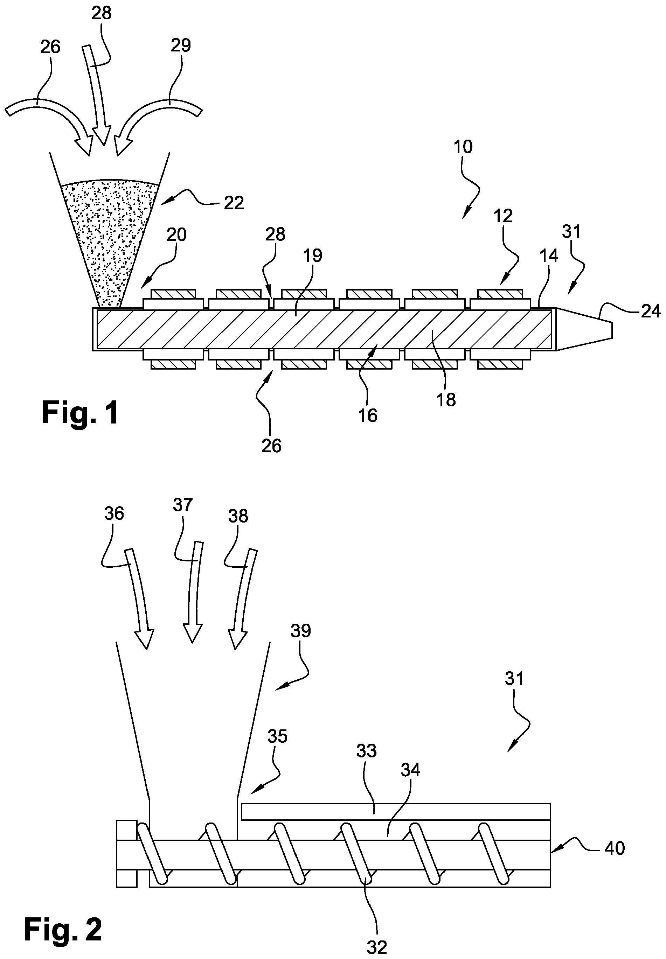

On se réfère maintenant à la figure 1. On a représenté sur la figure 1 un dispositif d'extrusion selon un mode de réalisation de l'invention et désigné par la référence générale 10.

Le dispositif 10 forme une extrudeuse et comprend un stator 12 formant un fourreau 14 et un rotor 16 formant un système de vis (monovis ou bivis) sans fin 18. La vis 18 est mobile en rotation dans le fourreau 14. Le fourreau 14 et la vis 18 délimitent un espace annulaire 19 dans lequel progresse une composition à extruder.

Le dispositif 10 comprend une entrée située en amont 20 apte à l'introduction de composés, en l'espèce un produit contenant majoritairement du polypropylène 26 d'une fluidité contrôlée de 9 g/10 min, du polypropylène très fluide 28 et du SEBS greffé par de l'anhydride maléique 29. Le dispositif 10 comprend une trémie 22 permettant l'introduction de ces composés dans l'entrée 20. Le dispositif 10 comprend également une sortie 31 munie d'une tête d'extrusion 24.

On a représenté sur la figure 2 un dispositif de vis de presse selon un autre mode de réalisation de l'invention et désigné par la référence générale 31.

Le dispositif 31 forme une vis de presse à injecter et comprend une vis 32 entourée d'un fourreau 33. La vis 32 est mobile en rotation dans le fourreau 33. Le fourreau et la vis délimitent un espace annulaire 34 dans lequel progresse une composition à injecter.

Le dispositif 31 comprend une entrée en amont 35 apte à l'introduction de composés, en l'espèce un produit contenant majoritairement du polypropylène 36 d'une fluidité contrôlée de 9 g/10 min, du polypropylène très fluide 37 et du SEBS greffé par de l'anhydride maléique 38. Le dispositif 31 comprend une trémie 39 permettant l'introduction de ces composés dans l'entrée 35. Le dispositif 31 comprend également une sortie 40.

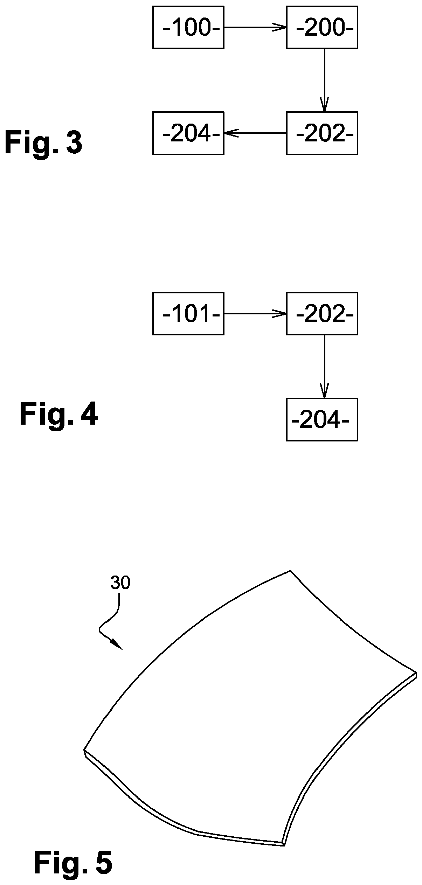

Dans les figures 3 et 4, les étapes identiques sont désignées par les mêmes numéros de référence.

On va maintenant décrire un mode de réalisation du procédé de fabrication d'une pièce illustrée à la figure 5 en référence à la figure 3 illustrant schématiquement les principales étapes de ce procédé.

Lors d'une étape 100, on introduit dans une extrudeuse un produit contenant majoritairement du polypropylène. On introduit également lors de cette étape un polypropylène très fluide et un polymère greffé par de l'anhydride maléique.

Le produit contenant majoritairement du polypropylène présente une fluidité contrôlée selon la norme ISO 1133 (230°C, 2,16 kg) inférieure à 10 g/10 min et est ajouté à raison de 82 à 88 % bornes incluses en masse totale de la composition. En variante, le produit contient entre 5 et 10 % bornes incluses de polyéthylène, en masse totale du produit. De façon optionnelle, au moins une partie du produit est issue de recyclage.

Le polypropylène très fluide présente une fluidité contrôlée selon la norme ISO 1133 (230 °C, 2,16 kg) supérieure à 400 g/10 min et est ajouté à raison de 7 à 13 % bornes incluses en masse totale de la composition.

Le polymère greffé par de l'anhydride maléique est ajouté à raison de 2 à 8 % bornes incluses en masse totale de la composition. Ce polymère est par exemple du SEBS.

Lors d'une étape 200, on récupère la composition fabriquée. Puis, dans une étape 202, on introduit, par exemple par injection, la composition dans un moule et on moule la pièce 30. Enfin, dans une étape 204, on refroidit le moule et on extrait la pièce 30. La pièce 30 pourra ultérieurement être traitée en surface. On pourra notamment y appliquer une peinture.

Un autre mode de réalisation du procédé de fabrication d'une pièce illustrée à la figure 5 est présenté en référence à la figure 4 illustrant schématiquement les principales étapes de ce procédé.

Lors d'une étape 101, on introduit dans une vis de presse un produit contenant majoritairement du polypropylène. On introduit également lors de cette étape un polypropylène très fluide et un polymère greffé par de l'anhydride maléique.

Le produit contenant majoritairement du polypropylène présente une fluidité contrôlée selon la norme ISO 1133 (230°C, 2,16 kg) inférieure à 10 g/10 min et est ajouté à raison de 82 à 88 % bornes incluses en masse totale de la composition. En variante, le produit contient entre 5 et 10 % bornes incluses de polyéthylène, en masse totale du produit. De façon optionnelle, au moins une partie du produit est issue de recyclage.

Le polypropylène très fluide présente une fluidité contrôlée selon la norme ISO 1133 (230°C, 2,16 kg) supérieure à 400 g/10 min et est ajouté à raison de 7 à 13 % bornes incluses en masse totale de la composition.

Le polymère greffé par de l'anhydride maléique est ajouté à raison de 2 à 8 % bornes incluses en masse totale de la composition. Ce polymère est par exemple du SEBS.

Dans une étape 202, on introduit, par exemple par injection, la composition dans un moule et on moule la pièce 30. Enfin, dans une étape 204, on refroidit le moule et on extrait la pièce 30. La pièce 30 pourra ultérieurement être traitée en surface. On pourra notamment y appliquer une peinture.

### Exemple A d'un échantillon d'une composition selon l'invention :

Une composition a été obtenue en introduisant dans une extrudeuse 85 % de polypropylène homopolymère présentant une fluidité de 9 g/10 min, 10 % de polypropylène homopolymère très fluide et 5 % de SEBS greffé par de l'anhydride maléique. La matière extrudée a ensuite été soumise à granulation.

Un échantillon de la matière ainsi obtenue est soumis de façon classique à une analyse par spectrométrie infrarouge à transformée de Fourier ou spectrométrie IRTF. En bref, 2 g. de granulés de la matière à analyser sont soumis à un pressage à 200 °C de manière à obtenir un film de 150 µm environ d'épaisseur. Le film est ensuite étudié en spectroscopie IRTF. La présence de l'acide maléique est associée à un pic de forte intensité entre 1700 et 1800 cm⁻¹, ce qui correspond à la détection des fonctions (C=O) de l'acide maléique présent dans l'échantillon.

### Exemple B d'un échantillon d'une composition témoin :

Une composition témoin a été obtenue en introduisant dans une extrudeuse 87.5 % de polypropylène homopolymère présentant une fluidité de 9 g/10 min et 12.5 % de polypropylène homopolymère très fluide. La matière extrudée a ensuite été soumise à granulation. Un échantillon de matière a été analysé selon le même protocole que précédemment. Les résultats en spectroscopie IRTF ne montrent pas de pic intense caractéristique des liaisons (C=O) de l'acide maléique entre 1700 et 1800 cm⁻¹.

### Exemple C d'un échantillon d'une composition selon l'invention :

Une composition a été obtenue en introduisant dans le silo d'entrée d'une presse à injecter, 85 % de polypropylène homopolymère présentant une fluidité de 9 g/10 min, 10 % de polypropylène homopolymère très fluide et 5 % de SEBS greffé par de l'anhydride maléique. Après injection du mélange dans un moule, un échantillon de la matière mise en forme est ensuite soumis à une analyse selon le même protocole que précédemment. Les résultats en spectroscopie IRTF montrent un pic intense entre 1700 et 1800 cm⁻¹.

### Exemple D d'un échantillon d'une composition témoin :

Une composition a été obtenue en introduisant dans le silo d'entrée d'une presse à injecter, 87.5 % de polypropylène homopolymère présentant une fluidité de 9 g/10 min et 12.5 % de polypropylène homopolymère très fluide. Après injection du mélange dans un moule, un échantillon de la matière mise en forme est soumis à une analyse selon le même protocole que précédemment. Les résultats en spectroscopie IRTF ne montrent pas de pic intense caractéristique des liaisons (C=O) de l'acide maléique entre 1700 et 1800 cm⁻¹.

### Exemple E d'un échantillon d'une composition selon l'invention :

Une composition a été obtenue en introduisant dans une extrudeuse 85 % d'un produit contenant majoritairement du polypropylène homopolymère et 8 % de polyéthylène, le produit présentant une fluidité de 9 g/10 min. 10 % de polypropylène homopolymère très fluide ont été ajoutés, ainsi que 5 % de SEBS greffé par de l'anhydride maléique. La matière extrudée a ensuite été soumise à granulation. Un échantillon de la matière obtenue a été soumis à une analyse selon le même protocole que dans les exemples précédents. Les résultats en spectroscopie IRTF montrent un pic intense entre 1700 et 1800 cm⁻¹.

### Exemple F d'un échantillon d'une composition témoin :

Une composition a été obtenue en introduisant dans une extrudeuse 87.5 % d'un produit contenant majoritairement du polypropylène homopolymère et 8 % de polyéthylène, le produit présentant une fluidité de 9 g/10 min. 12.5 % de polypropylène homopolymère très fluide ont été ajoutés. La matière extrudée a ensuite été soumise à granulation. Un échantillon de la matière obtenue a été soumis à une analyse selon le même protocole que précédemment. Les résultats en spectroscopie IRTF ne montrent pas de pic intense caractéristique des liaisons (C=O) de l'acide maléique entre 1700 et 1800 cm⁻¹.

### Exemple G d'un échantillon d'une composition selon l'invention :

Une composition a été obtenue en introduisant dans le silo d'entrée d'une presse à injecter, 85 % d'un produit contenant majoritairement du polypropylène homopolymère et 8 % de polyéthylène, le produit présentant une fluidité de 9 g/10 min. 10 % de polypropylène homopolymère très fluide et 5 % de SEBS greffé par de l'anhydride maléique ont été ajoutés. Après injection du mélange dans un moule, un échantillon de la matière mise en forme est soumis à une analyse selon le même protocole que précédemment. Les résultats en spectroscopie IRTF montrent un pic intense entre 1700 et 1800 cm⁻¹.

### Exemple H d'un échantillon d'une composition témoin :

Une composition a été obtenue en introduisant dans le silo d'entrée d'une presse à injecter, 87.5 % d'un produit contenant majoritairement du polypropylène homopolymère et 8 % de polyéthylène, le produit présentant une fluidité de 9 g/10 min. 12.5 % de polypropylène homopolymère très fluide ont été ajoutés. Après injection du mélange dans un moule, un échantillon de la matière mise en forme est soumis de façon classique à une analyse selon le même protocole que précédemment. Les résultats en spectroscopie IRTF ne montrent pas de pic intense caractéristique des liaisons (C=O) de l'acide maléique entre 1700 et 1800 cm⁻¹.

On a représenté sur la figure 5 la pièce 30. La pièce 30 forme une peau extérieure d'une pièce de carrosserie pour véhicule automobile, ici d'un capot. La pièce 30 présente une épaisseur inférieure à 3 mm. Les compositions des exemples A et C permettent de fabriquer une telle pièce. Il en est de même pour les compositions E et G. Les pièces fabriquées dans ces dernières compositions sont conformes au cahier des charges imposé pour les pièces en matériau vierge. En revanche, avec les compositions des exemples B, D, F et H, il n'a pas été possible de fabriquer des pièces conformes à ce cahier des charges.

L'invention n'est pas limitée aux modes de réalisation présentés et d'autres modes de réalisation apparaîtront clairement à l'homme du métier.

En effet, la composition pourra être fabriquée en utilisant un autre dispositif qu'un dispositif d'extrusion ou une vis de presse ou bien avec un ordre d'incorporation des composants différent.

Lorsque le procédé sera effectué en deux étapes distinctes, les deux étapes pourront être réalisées dans un mélangeur différent.

On pourra également fabriquer d'autres pièces que des pièces de carrosserie pour véhicule automobile et même des pièces destinées à d'autres domaines que celui de l'automobile.

Le produit contenant majoritairement du polypropylène pourra contenir un autre polymère que le polyèthylène.

Le polymère greffé par de l'anhydride maléique n'est pas limité au SEBS mais pourra être un autre polymère comme par exemple du polypropylène.

## Revendications

1. Procédé de fabrication d'une composition **caractérisé par** la mise en présence des trois composants suivants :
- un produit contenant majoritairement du polypropylène présentant une fluidité contrôlée selon la norme ISO 1133 (230°C, 2,16 kg) inférieure à 10 g/10 min, présent à raison de 82 à 88 %, bornes incluses, en masse totale de la composition,
- du polypropylène présentant une fluidité contrôlée selon la norme ISO 1133 (230°C, 2,16 kg) supérieure à 400 g/10 min, présent à raison de 7 à 13 %, bornes incluses, en masse totale de la composition, et
- un polymère greffé par de l'anhydride maléique, présent à raison de 2 à 8 %, bornes incluses, en masse totale de la composition.

2. Procédé selon la revendication précédente, ledit procédé comprenant deux étapes, exécutées dans cet ordre :
- mise en présence du produit contenant majoritairement du polypropylène et du polypropylène présentant une fluidité contrôlée selon la norme ISO 1133 (230°C, 2,16 kg) supérieure à 400 g/10 min, et
- ajout du polymère greffé par de l'anhydride maléique.

3. Procédé selon la revendication précédente, dans lequel le produit contenant majoritairement du polypropylène et le polypropylène présentant une fluidité contrôlée selon la norme ISO 1133 (230°C, 2,16 kg) supérieure à 400 g/10 min sont mis en présence de manière à obtenir un premier mélange et le polymère greffé par de l'anhydride maléique est ajouté dans un deuxième temps à ce premier mélange.

4. Procédé selon l'une quelconque des revendications précédentes, dans lequel le polymère greffé par de l'anhydride maléique est du Styrène Ethylène Butadiène Styrène (SEBS).

5. Procédé selon l'une quelconque des revendications précédentes, dans lequel la mise en présence des composants est effectuée dans une extrudeuse.

6. Procédé selon l'une quelconque des revendications 1 à 4, dans lequel la mise en présence des composants est effectuée dans une vis de presse.

7. Procédé selon l'une quelconque des revendications précédentes, dans lequel le produit contenant majoritairement du polypropylène contient en masse totale dudit produit entre 5 et 10 % bornes incluses de polyéthylène.

8. Procédé selon l'une quelconque des revendications précédentes, dans lequel le produit contenant majoritairement du polypropylène est issu au moins en partie de recyclage.

9. Composition obtenue à partir du procédé selon l'une quelconque des revendications précédentes, **caractérisée en ce qu'**elle contient au moins du polypropylène, du polyéthylène et de l'acide maléique, et **en ce qu'**elle présente une fluidité contrôlée selon la norme ISO 1133 (230°C, 2,16 kg) supérieure ou égale à 30 g/10 min.

10. Composition selon la revendication précédente, ladite composition contenant au moins 0,2 % en masse totale de la composition d'un polymère greffé par de l'anhydride maléique.

11. Composition selon l'une des revendications 9 et 10, dans laquelle le polyéthylène et au moins une partie du polypropylène de la composition sont issus de recyclage.

12. Pièce de véhicule automobile fabriquée dans une composition selon l'une quelconque des revendications 9 à 11.

13. Pièce selon la revendication précédente, ladite pièce formant au moins une partie d'une pièce de carrosserie pour véhicule automobile.

## Patentansprüche

1. Verfahren zur Herstellung einer Zusammensetzung, **gekennzeichnet durch** das Zusammenbringen der drei folgenden Komponenten:
- ein Produkt, das mehrheitlich Polypropylen enthält, das eine gemäß der Norm ISO 1133 kontrollierte Fließfähigkeit (230 °C, 2,16 kg) kleiner als 10 g/10 min. aufweist und in der Gesamtmasse der Zusammensetzung im Verhältnis von 82 bis 88 %, jeweils einschließlich, vorhanden ist,
- Polypropylen, das eine gemäß der Norm ISO 1133 kontrollierte Fließfähigkeit (230 °C, 2,16 kg) größer als 400 g/10 min. aufweist und in der Gesamtmasse der Zusammensetzung im Verhältnis von 7 bis 13 %, jeweils einschließlich, vorhanden ist, und
- ein mit Maleinanhydrid gepfropftes Polymer, das in der Gesamtmasse der Zusammensetzung im Verhältnis von 2 bis 8 %, jeweils einschließlich, vorhanden ist.

2. Verfahren nach dem vorhergehenden Anspruch, wobei das Verfahren zwei Schritte umfasst, die in dieser Reihenfolge ausgeführt werden:
- Zusammenbringen des Produkts, das mehrheitlich Polypropylen enthält, und des Polypropylens, das eine gemäß der Norm ISO 1133 kontrollierte Fließfähigkeit (230 °C, 2, 16 kg) größer als 400 g/10 min. aufweist, und
- Zugeben des mit Maleinanhydrid gepfropften Polymers.

3. Verfahren nach dem vorhergehenden Anspruch, bei dem das Produkt, das mehrheitlich Polypropylen enthält, und das Polypropylen, das eine gemäß der Norm ISO 1133 kontrollierte Fließfähigkeit (230 °C, 2,16 kg) größer als 400 g/10 min. aufweist, in der Form zusammengebracht werden, dass ein erstes Gemisch erhalten wird und das mit Maleinanhydrid gepfropfte Polymer in einem zweiten Schritt zu diesem ersten Gemisch zugegeben wird.

4. Verfahren nach einem der vorhergehenden Ansprüche, bei dem das mit Maleinanhydrid gepfropfte Polymer Styrol-Ethylen-Butylen-Styrol (SEBS) ist.

5. Verfahren nach einem der vorhergehenden Ansprüche, bei dem das Zusammenbringen der Komponenten in einem Extruder erfolgt.

6. Verfahren nach einem der Ansprüche 1 bis 4, bei dem das Zusammenbringen der Komponenten in einer Pressspindel erfolgt.

7. Verfahren nach einem der vorhergehenden Ansprüche, bei dem das Produkt, das mehrheitlich Polypropylen enthält, in der Gesamtmasse des Produkts zwischen 5 und 10 %, jeweils einschließlich, Polyethylen enthält.

8. Verfahren nach einem der vorhergehenden Ansprüche, bei dem das Produkt, das mehrheitlich Polypropylen enthält, mindestens zum Teil aus Recycling stammt.

9. Zusammensetzung, die ausgehend von dem Verfahren nach einem der vorhergehenden Ansprüche erhalten wird, **dadurch gekennzeichnet, dass** sie mindestens Polypropylen, Polyethylen und Maleinsäure enthält und dass sie eine gemäß der Norm ISO 1133 kontrollierte Fließfähigkeit (230 °C, 2,16 kg) größer oder gleich 30 g/10 min. aufweist.

10. Zusammensetzung nach dem vorhergehenden Anspruch, wobei die Zusammensetzung mindestens 0,2 % in der Gesamtmasse der Zusammensetzung eines mit Maleinanhydrid gepfropften Polymers enthält.

11. Zusammensetzung nach einem der Ansprüche 9 und 10, wobei das Polyethylen und mindestens ein Teil des Polypropylens der Zusammensetzung aus Recycling stammen.

12. Teil für Kraftfahrzeug, hergestellt aus einer Zusammensetzung nach einem der Ansprüche 9 bis 11.

13. Teil nach dem vorhergehenden Anspruch, wobei das Teil mindestens einen Teil eines Karosserieteils für ein Kraftfahrzeug bildet.

## Claims

1. Method for manufacturing a composition, **characterised by** bringing into contact the following three components:
- a product containing mostly polypropylene having a controlled fluidity according to standard ISO 1133 (230 °C, 2.16 kg) less than 10 g/10 min, present in an amount from 82 % to 88 % inclusive, by total weight of the composition,
- polypropylene having a controlled fluidity according to standard ISO 1133 (230 °C, 2.16 kg) greater than 400 g/10 min, present in an amount from 7 % to 13 % inclusive, by total weight of the composition, and
- a polymer grafted with maleic anhydride, present in an amount from 2 % to 8 % inclusive, by total weight of the composition.

2. Method according to the preceding claim, said method comprising two steps, performed in this order:
- bringing into contact the product containing mostly polypropylene and the polypropylene having a controlled fluidity according to standard ISO 1133 (230 °C, 2.16 kg) greater than 400 g/10 min, and
- adding the polymer grafted with maleic anhydride.

3. Method according to the preceding claim, wherein the product containing mostly polypropylene and the polypropylene having a controlled fluidity according to standard ISO 1133 (230 °C, 2.16 kg) greater than 400 g/10 min are brought into contact so as to obtain a first mixture and the polymer grafted with maleic anhydride is added in a second stage to this first mixture.

4. Method according to any one of the preceding claims, wherein the polymer grafted with maleic anhydride is Styrene Ethylene Butadiene Styrene (SEBS).

5. Method according to any one of the preceding claims, wherein the components are brought into contact in an extruder.

6. Method according to any one of claims 1 to 4, wherein the components are brought into contact in a press screw.

7. Method according to any one of the preceding claims, wherein the product containing mostly polypropylene contains between 5 % and 10 % inclusive of polyethylene, by total weight of said product.

8. Method according to any one of the preceding claims, wherein the product containing mostly polypropylene is obtained at least partly from recycling.

9. Composition obtained from the method according to any one of the preceding claims, **characterised in that** it contains at least polypropylene, polyethylene and maleic acid, and **in that** it has a controlled fluidity according to standard ISO 1133 (230 °C, 2.16 kg) greater than or equal to 30 g/10 min.

10. Composition according to the preceding claim, said composition containing at least 0.2 % by total weight of the composition of a polymer grafted with maleic anhydride.

11. Composition according to claim 9 or 10, wherein the polyethylene and at least some of the polypropylene of the composition are obtained from recycling.

12. Motor vehicle part manufactured in a composition according to any one of claims 9 to 11.

13. Part according to the preceding claim, said part forming at least some of a body part for motor vehicle.
